# EUROPEAN PATENT SPECIFICATION

(11) **EP 3 276 477 B1**
(45) Date of publication and mention of the grant of the patent: **13.10.2021**
(21) Application number: 17161770.7
(22) Date of filing: 20.03.2017
(51) Int. Cl.: G06F 3/0483, G06F 3/0486, G06F 3/0488

(54) **DESKTOP PAGE DISPLAY METHOD AND DEVICE**
VERFAHREN UND VORRICHTUNG ZUR DESKTOPSEITENANZEIGE
PROCÉDÉ ET AFFICHEUR DE PAGE DE BUREAU

(30) Priority: 27.07.2016 CN 201610605204
(43) Date of publication of application: 31.01.2018
(73) Proprietor: Beijing Xiaomi Mobile Software Co., Ltd., Beijing 100085 (CN)
(72) Inventor: LU, Xuhui, Beijing, Beijing 100085 (CN); WANG, Bin, Beijing, Beijing 100085 (CN); QIAO, Zhongliang, Beijing, Beijing 100085 (CN)
(74) Representative: dompatent von Kreisler Selting Werner - Partnerschaft von Patent- und Rechtsanwälten mbB

(56) References cited:
- EP-A1- 2 682 852
- WO-A1-2015/096137
- US-A1- 2013 080 951
- US-A1- 2013 169 555

## Description

### TECHNICAL FIELD

The present disclosure generally relates to terminals technology, and more particularly, to a desktop page display method and device.

### BACKGROUND

At present, when multiple applications are arranged in desktop software, a user is usually required to move a certain application icon to rearrange the application icon, thereby achieving better visual and experience effects. A specific movement process is as follows: when being required to move a certain icon from a current desktop page to other desktop page, the user is required to press the icon to manually move the icon to an edge of a screen to further wait for desktop switching, and then continues moving the icon to a certain proper position on a switched desktop. Such an icon cross-desktop movement manner has the following problems: the user has to wait for a certain period of time after moving the icon to the edge of the screen, and then the desktop page may be switched. In addition, when the user moves the icon to the edge of the screen, after the desktop page is switched, the user is required to move away the icon immediately, otherwise the desktop software may determine that the user tends to continue switching the desktop page and thus continue switching the desktop page, thereby moving the icon to a desktop page unexpected by the user.

Document WO 2015/096137 A1 relates to a cross-interface data transfer method and a terminal. When one or a plurality of data objects on a terminal interface is operated in a predetermined way, at least one other interface capable of receiving the one or a plurality data objects is displayed on the terminal interface. One target interface is determined from at least one other interface and the one or a plurality of data objects are transferred to the target interface.

### SUMMARY

The embodiments of the present disclosure provide a desktop page display method and device. The invention is set out in the appended set of claims.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart showing a desktop page display method, according to an exemplary embodiment.
Fig. 2 is a flow chart showing other desktop pages display method.
Fig. 3 is a flow chart showing other desktop pages display method, according to an exemplary embodiment.
Fig. 4A is a schematic diagram illustrating a process and effect of moving icon A to first desktop switching identifier M, according to an exemplary embodiment.
Fig. 4B is a schematic diagram illustrating a process and effect of moving icon A to a second desktop switching identifier N, according to an exemplary embodiment.
Fig. 5 is a flow chart showing other desktop pages display method.
Fig. 6 is a flow chart showing other desktop pages display method, according to the present invention.
Fig. 7 is a flow chart showing other desktop pages display method.
Fig. 8 is a block diagram of a desktop page display device, according to an exemplary embodiment.
Fig. 9 is a block diagram of other desktop pages display device.
Fig. 10 is a block diagram of other desktop pages display device, according to an exemplary embodiment.
Fig. 11 is a block diagram of other desktop pages display device.
Fig. 12 is a block diagram of other desktop pages display device, according to the present invention.
Fig. 13 is a block diagram of other desktop pages display device.
Fig. 14 is a block diagram of other desktop pages display device.
Fig. 15 is a block diagram of an apparatus applying a desktop page display device.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

At present, when multiple applications are arranged in desktop software, a user is usually required to move a certain application icon to rearrange the application icon, thereby achieving better visual and experience effects. A specific movement process is as follows: when being required to move a certain icon from a current desktop page to other desktop page, the user is required to press the icon to manually move the icon to an edge of a screen to further wait for desktop switching, and then continues moving the icon to a certain proper position on a switched desktop. Such an icon cross-desktop movement manner has the following problems: the user has to wait for a certain period of time after moving the icon to the edge of the screen, and then the desktop page may be switched. In addition, when the user moves the icon to the edge of the screen, after the desktop page is switched, the user is required to move away the icon immediately, otherwise the desktop software may determine that the user tends to continue switching the desktop page and thus continue switching the desktop page, thereby moving the icon to a desktop page unexpected by the user.

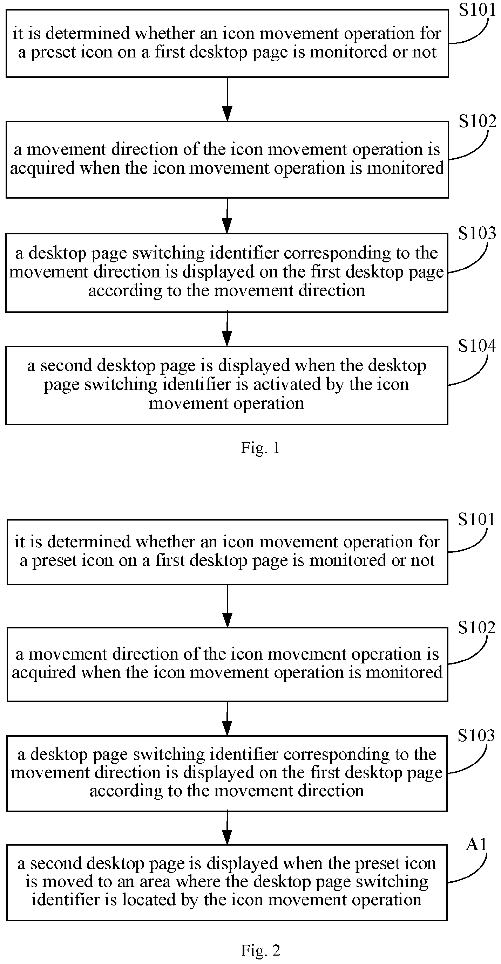

In order to solve the above technical problems, the embodiments of the present disclosure provide a desktop page display method, which may be applied to an icon movement program, system and device. An execution main body corresponding to the method may be a terminal installed with a touch screen, such as a mobile phone, a PAD and a computer. The terminal may adopt any operating system such as an Android operating system, a Windows operating system and an OS X operating system. As shown in Fig. 1, the method includes the following Step 101 to Step 104.

At Step 101, it is determined whether an icon movement operation for a preset icon on a first desktop page is monitored or not, wherein the first desktop page is a desktop page currently displayed on a touch screen.

The preset icon may be any application icon or an icon of any folder on the desktop page currently displayed on the touch screen. The icon movement operation may be a long pressing and moving operation and the like.

At Step 102, a movement direction of the icon movement operation is acquired when the icon movement operation is monitored.

At Step 103, a desktop page switching identifier corresponding to the movement direction is displayed on the first desktop page according to the movement direction.

Herein, the desktop page switching identifier is substantially an icon of an application, and may be activated to trigger an event of switching the desktop page currently displayed on the touch screen into a desktop page to which the user expects to switch the preset icon. In such a manner, when the icon movement operation is monitored to activate the desktop page switching identifier, the event of switching the desktop page is triggered to notify desktop page switching software (such as a desktop page application) installed on the terminal to switch the desktop page currently displayed on the touch screen to the second desktop page.

In addition, the desktop page switching identifier may be an icon in any shape such as a rectangle, a round and a triangle, and its background color may be personalized as long as transparency is unequal to 100% when the desktop page switching identifier is displayed. Of course, in order to not make the user confuse about the desktop page switching identifier and another icon on the desktop page, the background color of the desktop page switching identifier may be colorless, dark color or the like.

At Step 104, a second desktop page is displayed when the desktop page switching identifier is activated by the icon movement operation, wherein the second desktop page is a desktop page, other than the first desktop page, corresponding to the movement direction.

When the desktop page switching identifier is activated by the icon movement operation, the event of switching the desktop page currently displayed on the touch screen into the second desktop page to which the user expects to move the preset icon may be triggered, so that the preset icon is moved from the first desktop page to the second desktop page. In such a manner for implementing cross-desktop page movement of an icon via the desktop page switching identifier, the icon may be moved more flexibly, conveniently and accurately. It is unnecessary for the user to further wait for a certain period of time to implement the cross-desktop movement of the icon when moving the icon to the edge of the screen. In addition, the problem of mistaken continuous desktop page switching caused by the fact that a finger of the user does not move away the icon immediately in an icon cross-desktop movement manner in a related technology is solved.

In addition, movement of the preset icon to the second desktop page is implemented after the second desktop page becomes the desktop page currently displayed on the touch screen, and a position of the preset icon on the second desktop page may be the same as a position of the desktop page switching identifier on the first desktop page. Of course, the user may also continue moving the preset icon to another position on the second desktop page according to a personal requirement.

As shown in Fig. 2, in an example, Step 104 in Fig. 1 may be executed as follows.

At Step A1, the second desktop page is displayed when the preset icon is moved to an area where the desktop page switching identifier is located by the icon movement operation, wherein the area where the desktop page switching identifier is located is a display area occupied by the desktop page switching identifier on the touch screen, and when the preset icon is moved to the area where the desktop page switching identifier is located, a display area of the preset icon may be smaller than/equal to/larger than the area where the desktop page switching identifier is located.

The operation that the desktop page switching identifier is activated by the icon movement operation may be the operation that the preset icon is moved to the area where the desktop page switching identifier is located by the icon movement operation. As such, the desktop page switching identifier is activated when the preset icon is monitored to be moved to the area where the desktop page switching identifier is located by the icon movement operation, and after the desktop page switching identifier is activated, the event of switching the desktop page currently displayed on the touch screen to the second desktop page to which the user expects to move the preset icon is triggered to notify the desktop page switching software (such as the desktop page application) installed on the terminal to switch the desktop page currently displayed on the touch screen to the second desktop page, thereby flexibly and accurately implementing cross-desktop movement of the preset icon through the desktop page switching identifier.

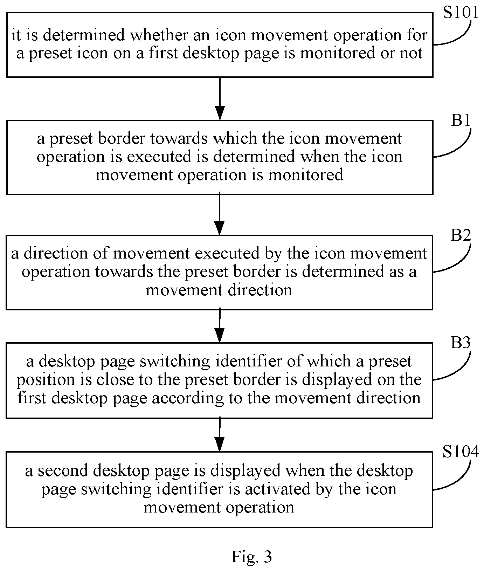

As shown in Fig. 3, in an embodiment, Step 102 shown in Fig. 1 may be executed as follows.

At Step B1, a preset border towards which the icon movement operation is executed is determined when the icon movement operation is monitored.

At Step B2, a direction of movement executed by the icon movement operation towards the preset border is determined as the movement direction, wherein the preset border includes: a first preset border or a second preset border.

The user may freely place the terminal, that is, a placement posture of the terminal may be diversified. The user always moves an icon towards a certain border regardless of the placement posture of the terminal. For conveniently and accurately acquiring the movement direction of the icon movement operation, the direction of movement executed by the icon movement operation towards the preset border is determined as the movement direction. The first preset border and the second preset border may be two vertical borders or two transverse borders of the terminal. Both the transverse borders and the vertical borders are borders perpendicular to a direction in which the desktop page may be switched. For example, for a mobile phone, the direction in which the desktop page may be switched may be a direction perpendicular to the two vertical borders, so that the first preset border and the second preset border may be the two vertical borders. For a PAD, the direction in which the desktop page may be switched is a direction perpendicular to the two vertical borders/a direction perpendicular to the two transverse borders, so that the first preset border and the second preset border may be the two vertical borders or the two transverse borders.

In addition, the direction of movement towards the preset border includes: a direction of perpendicular movement towards the preset border and a direction of oblique movement towards the preset border.

Step 103 shown in Fig. 1 may be executed as follows.

At Step B3, the desktop page switching identifier of which a preset position is close to the preset border is displayed on the first desktop page according to the movement direction, wherein the preset position of the desktop page switching identifier may be preset, and may preferably be a position which is at the edge of the preset border and where there is no icon.

The desktop page switching identifier corresponding to the movement direction may be a desktop page switching identifier pre-bound with the movement direction, and since the movement direction is a direction to the preset border, the desktop page switching identifier pre-bound with the movement direction is a desktop page switching identifier with a relationship with the preset border, and when the movement direction is to a certain border, the desktop page switching identifier which corresponds to the border and of which the preset position is close to the preset border may be displayed by displaying the desktop page switching identifier of which the preset position is close to the preset border and which corresponds to the preset border on the first desktop page; and therefore, the user may conveniently, rapidly and accurately implement the cross-desktop movement of the preset icon according to the desktop page switching identifier which is bound with the movement direction and close to the preset border.

For example, when the movement direction is a first direction to the first preset border, a first desktop page switching identifier bound with the first direction is displayed at a preset position close to the first preset border on the first desktop page; and
when the movement direction is a second direction to the second preset border, a second desktop page switching identifier bound with the second direction is displayed at a preset position close to the second preset border on the first desktop page.

In addition, the preset border includes two borders, i.e. the first preset border and the second preset border. Under such a condition, there are two desktop page switching identifiers in the terminal, and preset positions of the two desktop page switching identifiers are close to the corresponding preset borders (that is, the preset positions are positions at distances not larger than a preset distance threshold value away from the corresponding preset borders).

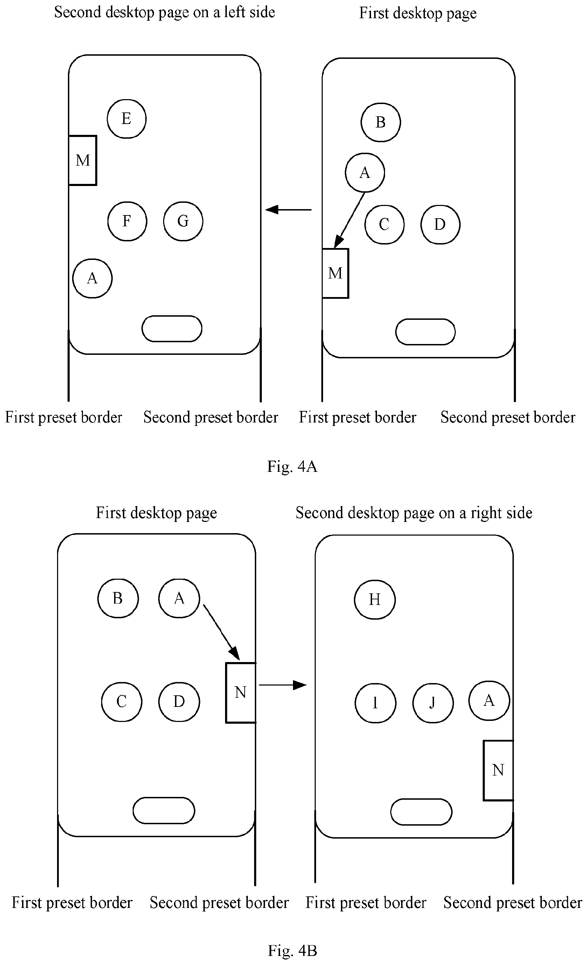

Finally, only one desktop page switching identifier is displayed on the touch screen at the same time, so that excessive occupation of a desktop page space is avoided on the basis of meeting an icon cross-desktop movement requirement of the user. For example, if the first preset border is a left-side vertical border and the second preset border is a right-side vertical border, when the movement direction is the first direction (to the left), the first desktop page switching identifier of which the preset position is close to the left-side vertical border is displayed (as shown in Fig. 4A, wherein each letter in Fig. 4A represents an icon, different letters represent different icons, icon M in the first desktop page is the first desktop page switching identifier, icon A in Fig. 4A is the preset icon, and an arrow of icon A represents the movement direction of icon A), and when the movement direction is the second direction (to the right), the second desktop page switching identifier of which the preset position is close to the right-side vertical border is displayed (as shown in Fig. 4B, wherein each letter in Fig. 4B represents an icon, different letters represent different icons, icon N in the first desktop page in Fig. 4B is the second desktop page switching identifier, icon A in Fig. 4B is the preset icon, and the arrow of icon A represents the movement direction of icon A).

In an embodiment, Step 103 shown in Fig. 1 may be executed as follows.

The desktop page switching identifier is displayed at a position close to a right side of the screen on the first desktop page when the movement direction is from left to right, wherein the position close to the right side of the screen is a position close to the right side after the screen is equally divided into left and right parts; or
the desktop page switching identifier is displayed at a position close to a left side of the screen on the first desktop page when the movement direction is from right to left, wherein the position close to the left side of the screen is a position close to the left side after the screen is equally divided into the left and right parts; or
the desktop page switching identifier is displayed at a position close to a lower side of the screen on the first desktop page when the movement direction is from top to bottom, wherein the position close to the lower side of the screen is a position close to the lower side after the screen is equally divided into upper and lower parts, and when the desktop page switching identifier is displayed at the position close to the lower side of the screen on the first desktop page, the placement posture of the terminal may be a vertical screen state or a non-vertical screen state (such as a transverse screen state); or
the desktop page switching identifier is displayed at a position close to an upper side of the screen on the first desktop page when the movement direction is from bottom to top, wherein the position close to the lower side of the screen is a position close to the upper side after the screen is equally divided into the upper and lower parts, and when the desktop page switching identifier is displayed at the position close to the upper side of the screen on the first desktop page, the placement posture of the terminal may be the vertical screen state or the non-vertical screen state (such as the transverse screen state).

The desktop page switching identifier corresponding to the movement direction may also be a desktop page switching identifier which does not form a binding relationship with the movement direction but of which a display position is consistent with the movement direction. For such a desktop page switching identifier, a specific display manner is as mentioned above. By the desktop page display manner, only one desktop page switching identifier is displayed on the touch screen at the same time, so that excessive occupation of the desktop page space is avoided on the basis of meeting the icon cross-desktop movement requirement of the user. Moreover, the display position of the desktop page switching identifier is consistent with the movement direction, so that great convenience is brought to the cross-desktop page movement of the preset icon by the user.

In addition, the desktop page switching identifier does not form the binding relationship with the movement direction, so that the desktop page switching identifiers displayed at the positions close to the right side/left side/upper side/lower side of the screen on the first desktop page may be the same desktop page switching identifier, and may also be multiple different desktop page switching identifiers.

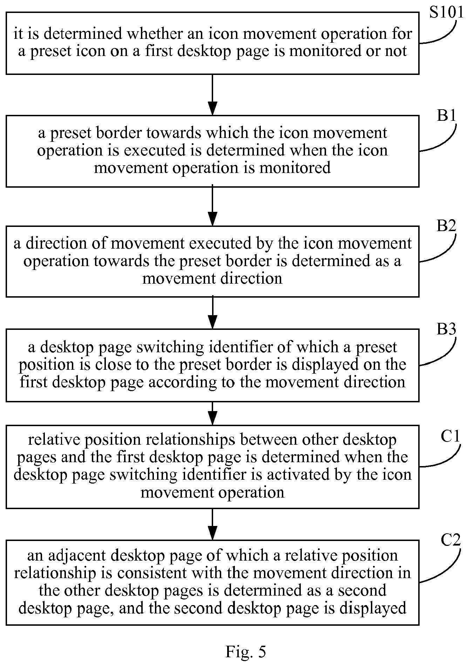

As shown in Fig. 5, in an example not covered by the claims, Step 104 in Fig. 1 may be executed as follows.

At Step C1, a relative position relationship between other desktop pages and the first desktop page is determined when the desktop page switching identifier is activated by the icon movement operation, wherein the other desktop pages includes: a desktop page, other than the first desktop page, of at least two desktop pages stored in the device where the touch screen is located.

At Step C2, an adjacent desktop page of which a relative position relationship is consistent with the movement direction in other desktop pages is determined as the second desktop page, and the second desktop page is displayed.

The adjacent desktop page is a first desktop page proximate to the first desktop page on the right side if the movement direction is rightward (including obliquely rightward and perpendicularly rightward), the adjacent desktop page is a first desktop page proximate to the first desktop page on the left side if the movement direction is leftward (including obliquely leftward and perpendicularly leftward), the adjacent desktop page is a first desktop page which is proximate to the first desktop page and may appear by an upward swipe if the movement direction is upward (including obliquely upward and perpendicularly upward, under such a condition, if the terminal is a mobile phone, its placement state may be the transverse screen state), and the adjacent desktop is a first desktop page which is proximate to the first desktop page and may appear by a downward swipe if the movement direction is downward (including obliquely downward and perpendicularly downward, under such a condition, if the terminal is a mobile phone, its placement state may be the transverse screen state).

The adjacent desktop page of which the relative position relationship is consistent with the movement direction in the other desktop page is determined as the second desktop page, so that the icon may be moved to the second desktop page consistent with the movement direction and proximate to the first desktop page.

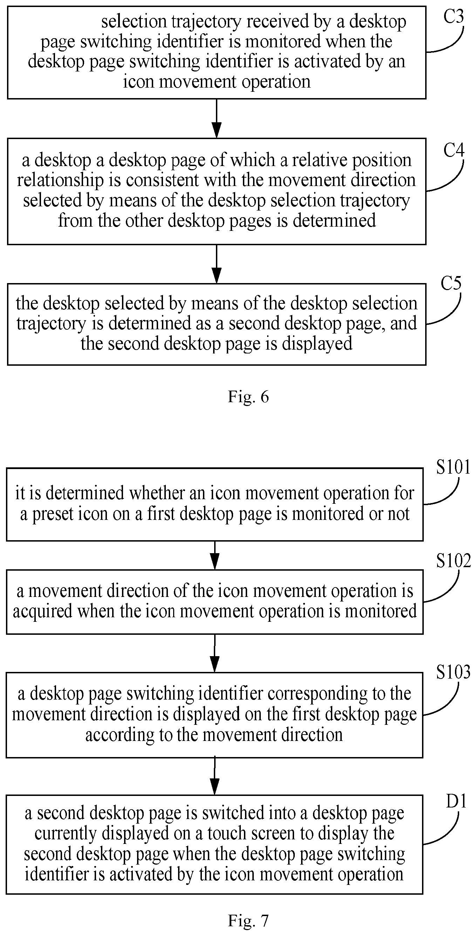

As shown in Fig. 6, in accordance with the present invention, Step 104 in Fig. 1 is executed as follows.

At Step C3, a desktop selection trajectory received by the desktop page switching identifier is monitored when the desktop page switching identifier is activated by the icon movement operation.

At Step C4, the desktop page of which the relative position relationship is consistent with the movement direction selected by means of the desktop selection trajectory from the other desktop page is determined.

Herein the desktop selection trajectory may be a numeral trajectory, and numerals may be Arabic numerals, so that the terminal may determine the desktop page to the user expects to move the preset icon. For example, if expecting to move the preset icon to an Nth desktop page consistent with the movement direction, the user may input numeral N into the desktop page switching identifier, and then the terminal may determine that the user expecting to move the preset icon to the Nth desktop page in desktop pages consistent with the movement direction when monitoring that the desktop page switching identifier receives a desktop selection trajectory of numeral N.

At Step C5, the desktop selected by means of the desktop selection trajectory is determined as the second desktop page, and the second desktop page is displayed.

When moving the preset icon, the user may not expect to move the preset icon to the adjacent desktop page, and may also be expected to continuously move the preset icon by N (N is a positive integer more than 2) desktop pages, so that the desktop selection trajectory received by the desktop page switching identifier may also be monitored and the desktop selection trajectory may further be analyzed to determine the desktop page to which the user expects to move the preset icon in the desktop pages consistent with the movement direction. Therefore, the desktop page corresponding to the desktop selection trajectory is selected from the desktop pages consistent with the movement direction as the second desktop page, and the second display page is further displayed to implement movement of the preset icon from the first desktop page to the second desktop page. For example, if the movement direction is a direction to the left-side vertical border/from right to left, when the preset icon is moved to a left-side desktop page switching identifier, it may be determined that all desktop pages on the left side of the first desktop page are desktop pages consistent with the movement direction at first, and if the left-side desktop page switching identifier is monitored to receive a trajectory of numeral "3", a third desktop page on the left side of the first desktop page is determined as the second desktop page, and the second desktop page is further displayed, so that the preset icon is moved to the third desktop page on the left side of the first desktop page by the left-side desktop page switching identifier.

For another example, if the movement direction is a direction to the right-side vertical border/from left to right, when the preset icon is moved to a right-side desktop page switching identifier, it may be determined that all desktop pages on the right side of the first desktop page are desktop pages consistent with the movement direction at first, and if the right-side desktop page switching identifier is monitored to receive a trajectory of numeral "2", a second desktop page on the right side of the first desktop page is determined as the second desktop page, and the second desktop page is further displayed, so that the preset icon is moved to the second desktop page on the right side of the first desktop page by the right-side desktop page switching identifier.

In an embodiment, Step 103 may be executed as follows.

The desktop page switching identifier is displayed when a distance between the preset icon and a preset reference object is smaller than a preset distance and the desktop page of which the relative position relationship is consistent with the movement direction in the other desktop page is not null, wherein the preset reference object includes: the preset border or the desktop switching identifier, and the preset distance may be freely set, and for example, may be a half of a distance between the vertical borders on the two sides or a half of a distance between the two transverse borders or 2/3 of the distance.

Since the preset border is usually a vertical border or a transverse border, if the distance between the preset icon and the preset border to which the movement direction is/the desktop page switching identifier is smaller than the preset distance, it is indicated that the preset icon is not positioned at a middle position of the screen and is close to the preset border/desktop page switching identifier. On such a basis, if the desktop page of which the relative position relationship is consistent with the movement direction in the other desktop page is not null (that is, from the first desktop page, there is at least an other desktop pages in the movement direction), it is indicated that the preset icon may move towards the desktop page consistent with the movement direction. Therefore, the desktop page switching identifier may be displayed to facilitate free movement of the preset icon from the first desktop page to the second desktop page through the desktop page switching identifier.

In an embodiment, the method further includes that:
the desktop page switching identifier is hidden when a preset icon hiding condition is met, wherein the preset icon hiding condition includes at least one of the following conditions that:
the icon movement operation is not monitored,
wherein it is indicated that the user does not move the icon when the icon movement operation is not monitored, so that the desktop page switching identifier may be hidden, the desktop page switching identifier is not required to be displayed, and influence on the user is avoided; or
the distance between the preset icon and the preset reference object which the movement direction is to is larger than or equal to the preset distance,
wherein it is indicated that the preset icon is yet far away from the preset reference object (for example, the preset icon is positioned at a middle position of the screen) and the user even may only expect to move the preset icon in the first desktop page if the distance between the preset icon and the preset reference object which the movement direction is to is larger than or equal to the preset distance, so that it is unnecessary to immediately display the desktop page switching identifier at this moment, and the desktop page switching identifier may be temporally hidden, that is, the desktop page switching identifier is not displayed on the first desktop page to avoid influence of early display of the desktop page switching identifier on the user; or
the desktop page of which the relative position relationship is consistent with the movement direction in the other desktop pages is null,
wherein it is indicated that there is no desktop page consistent with the movement direction in the at least two desktop pages and it is impossible to move the preset icon to the second desktop page without creating a new desktop page consistent with the movement direction if the desktop page of which the relative position relationship is consistent with the movement direction in the other desktop page is null, so that the desktop page switching identifier may be hidden, that is, the desktop page switching identifier is not displayed on the first desktop page.

For example, if the monitored movement direction is the direction to the left-side vertical border/from right to left, the desktop pages on the left side of the first desktop page are all theoretically desktop pages of which the relative position relationships are consistent with the movement direction in the other desktop pages, but if the desktop page of which the relative position relationship is consistent with the movement direction in the other desktop page is null, it is indicated that there is no desktop page on the left side of the first desktop page in the at least two existing desktop pages, and it is impossible to continue moving the preset icon to a left-side desktop page under the condition of not creating a new left-side desktop page, so that it is unnecessary to display the desktop page switching identifier, and the desktop page switching identifier may be hidden, that is, the desktop page switching identifier on the left side is not displayed on the first desktop page.

For another example, if the movement direction is the direction to the right-side vertical border/from left to right, the desktop pages on the right side of the first desktop page are all theoretically desktop pages of which the relative position relationships are consistent with the movement direction in the other desktop pages, but if the desktop page of which the relative position relationship is consistent with the movement direction in the other desktop page is null, it is indicated that there is no desktop page on the right side of the first desktop page in the at least two existing desktop pages, and it is impossible to continue moving the preset icon to a right-side desktop page under the condition of not creating a new right-side desktop page, so that it is unnecessary to display the desktop page switching identifier on the right side, and the desktop page switching identifier on the right side may be hidden, that is, the desktop page switching identifier on the right side is not displayed on the first desktop page.

In an embodiment, the method further includes that:
a display position of the desktop page switching identifier on the first desktop page is different from a display position of the desktop page switching identifier on the second desktop page.

Since the second desktop page may be any desktop page other than the first desktop page in the at least two desktop pages, the display position of the desktop page switching identifier on the first desktop page is different from the display position of the desktop page switching identifier on the second desktop page to avoid the desktop page switching identifier being overlapped when being displayed on different desktop pages and eliminate worries from the user about mistaken continuous desktop page switching caused by the fact that the icon is not rapidly moved away from the original position, corresponding to the desktop page switching identifier, on the first desktop page after being moved to the second desktop page.

For example, when the first preset border is the left-side vertical border and the movement direction is the direction to the left-side vertical border/the movement direction is from right to left, the preset icon may be moved from the first desktop page to other desktop pages proximate to the first desktop page (such as a left-side desktop page proximate to the first desktop page) when the preset icon is moved to the area where the first desktop page switching identifier is located on the first desktop page, but because positions of the first desktop page switching identifier on the first desktop page and the other desktop page on the left side of the first desktop page are different (for example, as shown in Fig. 4A, positions of a first desktop page switching identifier M on the first desktop page and the second desktop page are different, and of course, in Fig. 4A, when icon A is moved to the second desktop page on the left side, if the abovementioned preset icon hiding condition is met, the first desktop page switching identifier M is not displayed, and here, the first desktop page switching identifier M is displayed on the second desktop page just for describing that the positions of the first desktop page switching identifier M on different desktop pages are different), even though the preset icon is not continuously moved to another position on the second desktop page, the condition that the preset icon is mistakenly continuously moved to the desktop page on the left side may be avoided because the preset icon is not located in the area where the first desktop page switching identifier is located on the second desktop page.

For another example, when the second preset border is the right-side vertical border and the movement direction is the direction to the right-side vertical border/the movement direction is from left to right, the preset icon may be moved from the first desktop page to other desktop pages on the right side of the first desktop page (such as a right-side desktop page proximate to the first desktop page) when the preset icon is moved to the area where the second desktop page switching identifier is located on the first desktop page, but because positions of the second desktop page switching identifier on the first desktop page and the other desktop page on the right side of the first desktop page are different (for example, as shown in Fig. 4B, positions of a second desktop page switching identifier N on the first desktop page and the second desktop page are different, and of course, in Fig. 4B, when icon A is moved to the second desktop page on the right side, if the abovementioned preset icon hiding condition is met, the second desktop page switching identifier N is not displayed, and here, the second desktop page switching identifier N is displayed on the second desktop page just for describing that the positions of the second desktop page switching identifier N on different desktop pages are different), even though the preset icon is not continuously moved to another position on the second desktop page, the condition that the preset icon is mistakenly continuously moved to the desktop page on the right side may be avoided because the preset icon is not located in the area where the second desktop page switching identifier is located on the second desktop page.

As shown in Fig. 7, in an example, Step 104 may be executed as follows.

At Step D1, the second desktop page is switched into a desktop page currently displayed on the touch screen to display the second desktop page when the desktop page switching identifier is activated by the icon movement operation.

When the desktop page switching identifier is activated by the icon movement operation, the desktop page software may be notified to switch the second desktop page into the desktop page currently displayed on the touch screen to automatically move the preset icon from the first desktop page to the second desktop page.

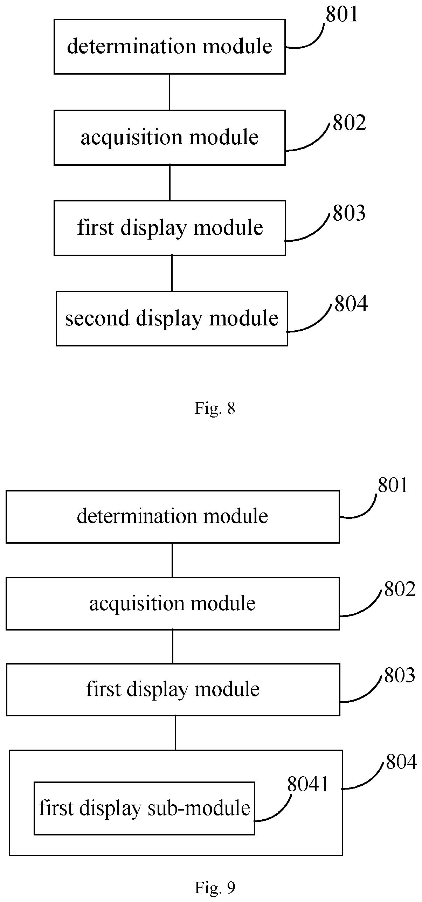

Corresponding to the desktop page display method provided by the embodiments of the present disclosure, the embodiments of the present disclosure further provide a desktop page display device, and as shown in Fig. 8, the device includes:
a determination module 801, configured to determine whether an icon movement operation for a preset icon on a first desktop page is monitored or not, wherein the first desktop page is a desktop page currently displayed on a touch screen;
an acquisition module 802, configured to acquire a movement direction of the icon movement operation when the icon movement operation is monitored;
a first display module 803, configured to display a desktop page switching identifier corresponding to the movement direction on the first desktop page according to the movement direction,
wherein the desktop page switching identifier is substantially an icon of an application, and may be activated to trigger an event of switching the desktop page currently displayed on the touch screen into a desktop page (such as a second desktop page) to which the user expects to switch the preset icon, and in such a manner, when the icon movement operation is monitored to activate the desktop page switching identifier, the event of switching the desktop page is triggered to notify desktop page switching software (such as a desktop page application) installed on a terminal to switch the desktop page currently displayed on the touch screen to the second desktop page; and
a second display module 804, configured to display a second desktop page when the desktop page switching identifier is activated by the icon movement operation, wherein the second desktop page is a desktop page, other than the first desktop page, corresponding to the movement direction.

When the desktop page switching identifier is activated by the icon movement operation, the event of switching the desktop page currently displayed on the touch screen into the second desktop page to which the user expects to move the preset icon may be triggered, so that the second desktop page becomes the desktop page currently displayed on the touch screen, the preset icon is moved from the first desktop page to the second desktop page. In such a manner for implementing cross-desktop page movement of an icon via the desktop page switching identifier, the icon may be moved more flexibly, conveniently and accurately. It is unnecessary for the user to further wait for a certain period of time to implement the cross-desktop movement of the icon when moving the icon to the edge of the screen. In addition, the problem of mistaken continuous desktop page switching caused by the fact that a finger of the user does not move away the icon immediately in an icon cross-desktop movement manner in the related technology is solved.

In addition, movement of the preset icon to the second desktop page is implemented after the second desktop page becomes the desktop page currently displayed on the touch screen, a position of the preset icon on the second desktop page may be the same as a position of the desktop page switching identifier on the first desktop page, and of course, the user may also continue moving the preset icon to another position on the second desktop page according to a personal requirement.

As shown in Fig. 9, in an example, the second display module 804 may include:
a first display sub-module 8041, configured to display the second desktop page when the preset icon is moved to an area where the desktop page switching identifier is located by the icon movement operation.

The operation that the desktop page switching identifier is activated by the icon movement operation may be the operation that the preset icon is moved to the area where the desktop page switching identifier is located by the icon movement operation, then, the desktop page switching identifier is activated when the preset icon is monitored to be moved to the area where the desktop page switching identifier is located by the icon movement operation, and after the desktop page switching identifier is activated, the event of switching the desktop page currently displayed on the touch screen to the second desktop page to which the user expects to move the preset icon to is triggered to notify the desktop page switching software (such as the desktop page application) installed on the terminal to switch the desktop page currently displayed on the touch screen to the second desktop page, thereby flexibly and accurately implementing cross-desktop movement of the preset icon through the desktop page switching identifier.

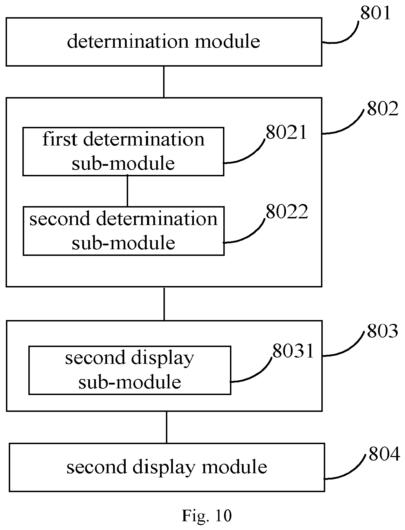

As shown in Fig. 10, in an embodiment, the acquisition module 802 may include:
a first determination sub-module 8021, configured to determine a preset border towards which the icon movement operation is executed when the icon movement operation is monitored; and
a second determination sub-module 8022, configured to determine a direction of movement executed by the icon movement operation towards the preset border as the movement direction, wherein the preset border includes: a first preset border or a second preset border; and
the first display module 803 includes:
a second display sub-module 8031, configured to display the desktop page switching identifier of which a preset position is close to the preset border on the first desktop page.

The desktop page switching identifier corresponding to the movement direction may be a desktop page switching identifier pre-bound with the movement direction, and since the movement direction is a direction to the preset border, the desktop page switching identifier pre-bound with the movement direction is a desktop page switching identifier with a corresponding relationship with the preset border, and when the movement direction is to a certain border, the desktop page switching identifier which corresponds to the border and of which the preset position is close to the preset border may be displayed by displaying the desktop page switching identifier of which the preset position is close to the preset border and which corresponds to the preset border on the first desktop page; and therefore, the user may conveniently, rapidly and accurately implement the cross-desktop movement of the preset icon according to the desktop page switching identifier which is bound with the movement direction and close to the preset border.

In an embodiment, the first display module 803 includes:
a third display sub-module, configured to display the desktop page switching identifier at a position close to a right side of the screen on the first desktop page when the movement direction is from left to right; or
a fourth display sub-module, configured to display the desktop page switching identifier at a position close to a left side of the screen on the first desktop page when the movement direction is from right to left; or
a fifth display sub-module, configured to display the desktop page switching identifier at a position close to a lower side of the screen on the first desktop page when the movement direction is from top to bottom; or
a sixth display sub-module, configured to display the desktop page switching identifier at a position close to an upper side of the screen on the first desktop page when the movement direction is from bottom to top.

The desktop page switching identifier corresponding to the movement direction may also be a desktop page switching identifier which does not form a binding relationship with the movement direction but of which a display position is consistent with the movement direction. For such a desktop page switching identifier, a specific display manner is as mentioned above. By the desktop page display manner, only one desktop page switching identifier is displayed on the touch screen at the same time, so that excessive occupation of the desktop page space is avoided on the basis of meeting the icon cross-desktop movement requirement of the user. Moreover, the display position of the desktop page switching identifier is consistent with the movement direction, so that great convenience is brought to the cross-desktop page movement of the preset icon by the user.

In addition, the desktop page switching identifier does not form the binding relationship with the movement direction, so that the desktop page switching identifiers displayed at the positions close to the right side/left side/upper side/lower side of the screen on the first desktop page may be the same desktop page switching identifier, and may also be multiple different desktop page switching identifiers.

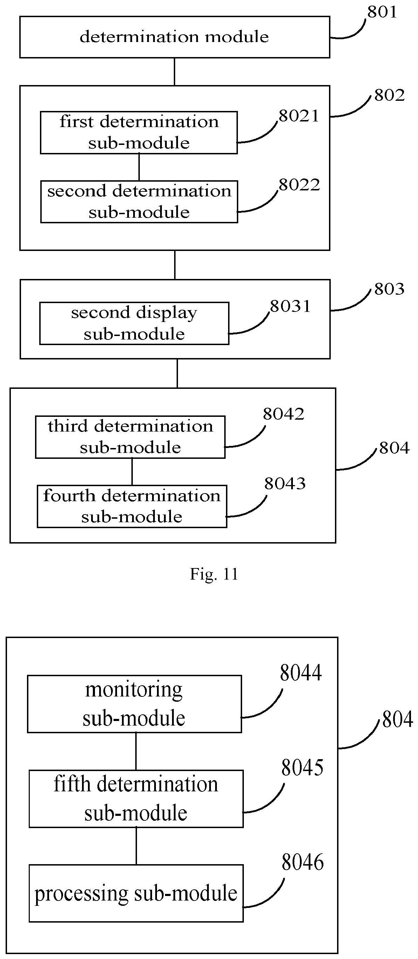

As shown in Fig. 11, in an example not covered by the claims, the second display module 804 includes:
a third determination sub-module 8042, configured to determine a relative position relationship between other desktop pages and the first desktop page when the desktop page switching identifier is activated by the icon movement operation, wherein the other desktop pages in-eludes: a desktop page, other than the first desktop page, in at least two desktop pages stored in the device where the touch screen is located; and
a fourth determination sub-module 8043, configured to determine an adjacent desktop page of which a relative position relationship is consistent with the movement direction in the other desktop pages as the second desktop page, and display the second desktop page.

The adjacent desktop page of which the relative position relationship is consistent with the movement direction in the other desktop pages is determined as the second desktop page, so that the icon may be moved to the second desktop page consistent with the movement direction and proximate to the first desktop page.

As shown in Fig. 12, in accordance with the present invention, the second display module 804 includes:
a monitoring sub-module 8044, configured to monitor a desktop selection trajectory received by the desktop page switching identifier when the desktop page switching identifier is activated by the icon movement operation;
a fifth determination sub-module 8045, configured to determine a desktop the desktop page of which the relative position relationship is consistent with the movement direction selected by means of the desktop selection trajectory from the other desktop pages ; and
a processing sub-module 8046, configured to determine the desktop selected by means of the desktop selection trajectory as the second desktop page, and display the second desktop page.

When moving the preset icon, the user may not expect to move the preset icon to the adjacent desktop page, and may also expect to continuously move the preset icon by N (N is a positive integer more than 2) desktop pages, so that the desktop selection trajectory received by the desktop page switching identifier may also be monitored and the desktop selection trajectory may further be analyzed to determine the desktop page to which the user expects to move the preset icon in the desktop pages consistent with the movement direction; and therefore, the desktop page corresponding to the desktop selection trajectory is selected from the desktop pages consistent with the movement direction as the second desktop page, and the second display page is further displayed to implement movement of the preset icon from the first desktop page to the second desktop page.

In an embodiment, the first display module 803 includes:
a seventh display sub-module, configured to display the desktop page switching identifier when a distance between the preset icon and a preset reference object is smaller than a preset distance and the desktop page of which the relative position relationship is consistent with the movement direction in the other desktop pages is not null, wherein the preset reference object includes: the preset border or the desktop switching identifier.

Since the preset border is usually a vertical border or a transverse border, if the distance between the preset icon and the preset border to which the movement direction is/the desktop page switching identifier is smaller than the preset distance, it is indicated that the preset icon is not positioned at a middle position of the screen and is close to the preset border/desktop page switching identifier. On such a basis, if the desktop page of which the relative position relationship is consistent with the movement direction in the other desktop pages is not null (that is, from the first desktop page, there is other desktop pages in the movement direction), it is indicated that the preset icon may move towards the desktop page consistent with the movement direction; and therefore, the desktop page switching identifier may be displayed to facilitate free movement of the preset icon from the first desktop page to the second desktop page through the desktop page switching identifier.

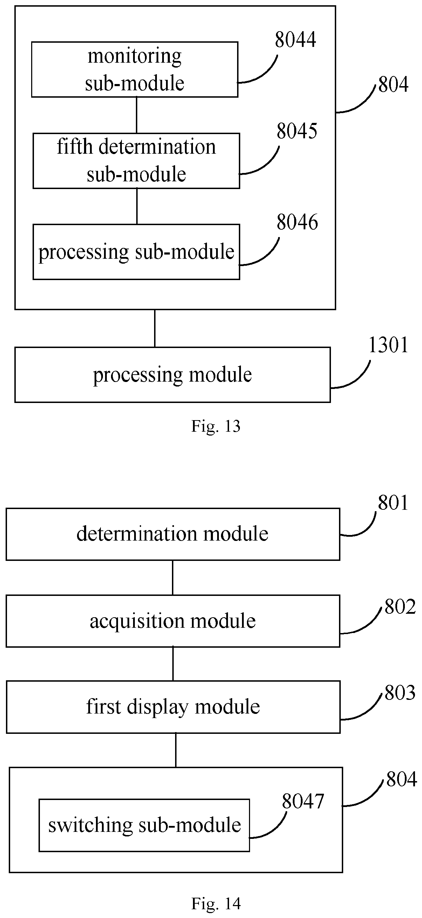

As shown in Fig. 13, in an embodiment, the device further includes:
a processing module 1301, configured to hide the desktop page switching identifier when a preset icon hiding condition is met, wherein the preset icon hiding condition includes at least one of the following conditions that:
the icon movement operation is not monitored; or
the distance between the preset icon and the preset reference object which the movement direction is to is larger than or equal to the preset distance; or
the desktop page of which the relative position relationship is consistent with the movement direction in the other desktop pages is null.

In an embodiment, the device further includes that:
a display position of the desktop page switching identifier on the first desktop page is different from a display position of the desktop page switching identifier on the second desktop page.

Since the second desktop page may be any desktop page other than the first desktop page in the at least two desktop pages, the display position of the desktop page switching identifier on the first desktop page is different from the display position of the desktop page switching identifier on the second desktop page to avoid the desktop page switching identifier being overlapped when being displayed on different desktop pages and eliminate worries from the user about mistaken continuous desktop page switching caused by the fact that the icon is not rapidly moved away from the original position, corresponding to the desktop page switching identifier, on the first desktop page after being moved to the second desktop page.

As shown in Fig. 14, in an embodiment, the second display module 804 may include:
a switching sub-module 8047, configured to switch the second desktop page into a desktop page currently displayed on the touch screen to display the second desktop page when the desktop page switching identifier is activated by the icon movement operation.

When the desktop page switching identifier is activated by the icon movement operation, the desktop page software may be notified to switch the second desktop page into the desktop page currently displayed on the touch screen to automatically move the preset icon from the first desktop page to the second desktop page.

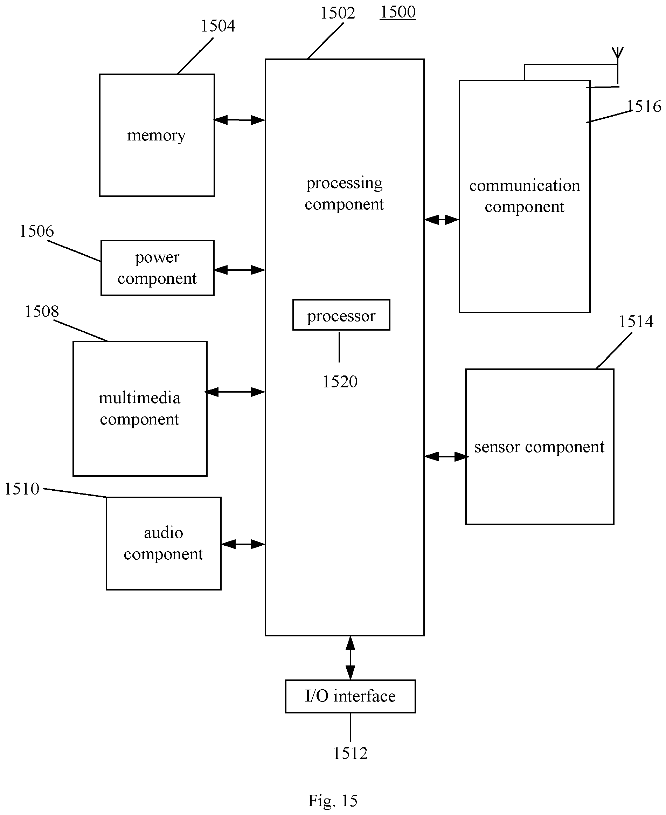

Fig. 15 is a block diagram of a desktop page display device 1500, according to an exemplary embodiment, and the device is applicable to a terminal device. For example, the device 1500 may be a mobile phone, a computer, a digital broadcast terminal, a messaging device, a gaming console, a tablet, a medical device, exercise equipment, a personal digital assistant and the like.

Referring to Fig. 15, the device 1500 may include one or more of the following components: a processing component 1502, a memory 1504, a power component 1506, a multimedia component 1508, an audio component 1510, an Input/Output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the abovementioned method. Moreover, the processing component 1502 may include one or more modules which facilitate interaction between the processing component 1502 and the other components. For instance, the processing component 1502 may include a multimedia module to facilitate interaction between the multimedia component 1508 and the processing component 1502.

The memory 1504 is configured to store various types of data to support the operation of the device 1500. Examples of such data include instructions for any storage objects or methods operated on the device 1500, contact data, phonebook data, messages, pictures, video, etc. The memory 1504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1506 provides power for various components of the device 1500. The power component 1506 may include a power management system, one or more power supplies, and other components associated with the generation, management and distribution of power for the device 1500.

The multimedia component 1508 includes a screen providing an output interface between the device 1500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1508 includes a front camera and/or a rear camera. The front camera and/or the rear camera may receive external multimedia data when the device 1500 is in an operation mode, such as a photographing mode or a video mode. Each of the front camera and the rear camera may be a fixed optical lens system or have focusing and optical zooming capabilities.

The audio component 1510 is configured to output and/or input an audio signal. For example, the audio component 1510 includes a Microphone (MIC), and the MIC is configured to receive an external audio signal when the device 1500 is in the operation mode, such as a call mode, a recording mode and a voice recognition mode. The received audio signal may be further stored in the memory 1504 or sent through the communication component 1516. In some embodiments, the audio component 1510 further includes a speaker configured to output the audio signal.

The I/O interface 1512 provides an interface between the processing component 1502 and a peripheral interface module, and the peripheral interface module may be a keyboard, a click wheel, a button and the like. The button may include, but not limited to: a home button, a volume button, a starting button and a locking button.

The sensor component 1514 includes one or more sensors configured to provide status assessment in various aspects for the device 1500. For instance, the sensor component 1514 may detect an on/off status of the device 1500 and relative positioning of components, such as a display and small keyboard of the device 1500, and the sensor component 1514 may further detect a change in a position of the device 1500 or a component of the device 1500, presence or absence of contact between the user and the device 1500, orientation or acceleration/deceleration of the device 1500 and a change in temperature of the device 1500. The sensor component 1514 may include a proximity sensor configured to detect presence of an object nearby without any physical contact. The sensor component 1514 may also include a light sensor, such as a Complementary Metal Oxide Semiconductor (CMOS) or Charge Coupled Device (CCD) image sensor, configured for use in an imaging application. In some embodiments, the sensor component 1514 may also include an acceleration sensor, a gyroscope sensor, a magnetic sensor, a pressure sensor or a temperature sensor.

The communication component 1516 is configured to facilitate wired or wireless communication between the device 1500 and another device. The device 1500 may access a communication-standard-based wireless network, such as a Wireless Fidelity (Wi-Fi) network, a 2nd-Generation (2G) or 3rd-Generation (3G) network or a combination thereof. In an exemplary embodiment, the communication component 1516 receives a broadcast signal or broadcast associated information from an external broadcast management system through a broadcast channel. In an exemplary embodiment, the communication component 1516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 1500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1504 including an instruction, and the instruction may be executed by the processor 1520 of the device 1500 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A desktop page display method, wherein the method comprises:
determining (S101) whether an icon movement operation for a preset icon on a first desktop page is monitored or not, wherein the first desktop page is a desktop page currently displayed on a touch screen;
acquiring (S102) a movement direction of the icon movement operation when the icon movement operation is monitored;
displaying (S103) a desktop page switching identifier corresponding to the movement direction on the first desktop page according to the movement direction; and
displaying (SI04) a second desktop page when the desktop page switching identifier is activated by the icon movement operation, wherein the second desktop page is a desktop page, other than the first desktop page, corresponding to the movement direction;
wherein displaying (SI04) the second desktop page when the desktop page switching identifier is activated by the icon movement operation comprises:
monitoring (C3) a desktop selection trajectory received by the desktop page switching identifier when the desktop page switching identifier is activated by the icon movement operation, wherein the desktop selection trajectory is a numeral trajectory;
determining (C4) a desktop page, the desktop page of which a relative position relationship is consistent with the movement direction, selected by means of the desktop selection trajectory from other desktop pages, wherein the other desktop pages comprise a desktop page, other than the first desktop page, of at least two desktop pages stored in a device where the touch screen is located; and
determining (C5) the desktop selected by means of the desktop selection trajectory as the second desktop page, and displaying the second desktop page.

2. The method according to claim 1, wherein acquiring (S102) the movement direction of the icon movement operation when the icon movement operation is monitored comprises:
determining (B1) a preset border towards which the icon movement operation is executed when the icon movement operation is monitored;
determining (B2) a direction of movement executed by the icon movement operation towards the preset border as the movement direction; and
wherein displaying (S103) the desktop page switching identifier corresponding to the movement direction on the first desktop page comprises:
displaying (B3) the desktop page switching identifier of which a preset position is close to the preset border on the first desktop page.

3. The method according to claim 1, wherein displaying (SI03) the desktop page switching identifier corresponding to the movement direction on the first desktop page comprises:
displaying the desktop page switching identifier at a position close to a right side of the touch screen on the first desktop page when the movement direction is from left to right; or
displaying the desktop page switching identifier at a position close to a left side of the touch screen on the first desktop page when the movement direction is from right to left; or
displaying the desktop page switching identifier at a position close to a lower side of the touch screen on the first desktop page when the movement direction is from top to bottom; or
displaying the desktop page switching identifier at a position close to an upper side of the touch screen on the first desktop page when the movement direction is from bottom to top.

4. The method according to claim 2, wherein displaying (SI03) the desktop page switching identifier corresponding to the movement direction on the first desktop page comprises:
displaying the desktop page switching identifier when a distance between the preset icon and a preset reference object is smaller than a preset distance and the desktop page of which the relative position relationship is consistent with the movement direction in the other desktop pages is not null, wherein the preset reference object comprises the preset border or the preset position of the desktop switching identifier.

5. The method according to claim 1, further comprising:
determining that a display position of the desktop page switching identifier on the first desktop page is different from a display position of the desktop page switching identifier on the second desktop page.

6. A desktop page display device, wherein the device comprises:
a determination module (801), configured to determine whether an icon movement operation for a preset icon on a first desktop page is monitored or not, wherein the first desktop page is a desktop page currently displayed on a touch screen;
an acquisition module (802), configured to acquire a movement direction of the icon movement operation when the icon movement operation is monitored;
a first display module (803), configured to display a desktop page switching identifier corresponding to the movement direction on the first desktop page according to the movement direction; and
a second display module (804), configured to display a second desktop page when the desktop page switching identifier is activated by the icon movement operation, wherein the second desktop page is a desktop page, other than the first desktop page, corresponding to the movement direction;
the second display module (804) includes a monitoring sub-module (8044), a fifth determination sub-module (8045) and a processing sub-module (8046):
the monitoring sub-module (8044) is configured to monitor a desktop selection trajectory received by the desktop page switching identifier when the desktop page switching identifier is activated by the icon movement operation, wherein the desktop selection trajectory is a numeral trajectory;
the fifth determination sub-module (8045) is configured to determine a desktop, the desktop page of which a relative position relationship is consistent with the movement direction, selected by means of the desktop selection trajectory from other desktop pages, wherein the other desktop pages comprise a desktop page, other than the first desktop page, of at least two desktop pages stored in the desktop page display device; and
and the processing sub-module (8046) is configured to determine the desktop page selected by means of the desktop selection trajectory as the second desktop page, and display the second desktop page.

7. The device according to claim 6, wherein the acquisition module (802) comprises:
a first determination sub-module (8021), configured to determine a preset border towards which the icon movement operation is executed when the icon movement operation is monitored;
a second determination sub-module (8022), configured to determine a direction of movement executed by the icon movement operation towards the preset border as the movement direction; and
wherein the first display module (803) comprises:
a second display sub-module (8031), configured to display the desktop page switching identifier of which a preset position is close to the preset border on the first desktop page.

## Patentansprüche

1. Desktopseitenanzeigeverfahren, bei welchem das Verfahren die folgenden Schritte aufweist:
Feststellen (S101), ob ein Icon-Bewegungsvorgang für ein voreingestelltes Icon auf einer ersten Desktopseite überwacht wird oder nicht, wobei die erste Desktopseite eine gegenwärtig auf einem Touchscreen angezeigte Desktopseite ist;
Erfassen (S102) einer Bewegungsrichtung des Icon-Bewegungsvorgangs, wenn der Icon-Bewegungsvorgang überwacht wird;
Anzeigen (S103) eines Desktopseitenwechselidentifikators entsprechend der Bewegungsrichtung auf der ersten Desktopseite gemäß der Bewegungsrichtung; und
Anzeigen (S104) einer zweiten Desktopseite, wenn der Desktopseitenwechselidentifikator durch den Icon-Bewegungsvorgang aktiviert wird, wobei die zweite Desktopseite eine andere Desktopseite als die erste Desktopseite ist, entsprechend der Bewegungsrichtung;
wobei das Anzeigen (S104) der zweiten Desktopseite, wenn der Desktopseitenwechselidentifikator durch den Icon-Bewegungsvorgang aktiviert wird, die folgenden Schritte aufweist:
Überwachen (C3) einer Desktop-Auswahltrajektorie, welche von dem Desktopseitenwechselidentifikator empfangen wird, wenn der Desktopseitenwechselidentifikator durch den Icon-Bewegungsvorgang aktiviert wird, wobei die Desktop-Auswahlbahn eine Zifferntrajektorie ist;
Bestimmen (C4) einer mittels der Desktop-Auswahltrajektorie von anderen Desktopseiten ausgewählten Desktopseite, deren relatives Positionsverhältnis mit der Bewegungsrichtung übereinstimmt, wobei die anderen Desktopseiten eine von der ersten Desktopseite verschiedene Desktopseite von mindestens zwei Desktopseiten sind, welche in einer Vorrichtung gespeichert sind, in welcher sich der Touchscreen befindet, und
Bestimmen (C5) des mittels der Desktop-Auswahltrajektorie gewählten Desktops als die zweite Desktopseite, und Anzeigen der zweiten Desktopseite.

2. Verfahren nach Anspruch 1, bei welchem das Erfassen (S102) der Bewegungsrichtung des Icon-Bewegungsvorgangs, wenn der Icon-Bewegungsvorgang überwacht wird, die folgenden Schritte aufweist:
Bestimmen (B1) eines voreingestellten Randes, in dessen Richtung der Icon-Bewegungsvorgang ausgeführt wird, wenn der Icon-Bewegungsvorgang überwacht wird,
Bestimmen (B2) einer Richtung der von dem Icon-Bewegungsvorgang in Richtung des voreingestellten Randes durchgeführten Bewegung als die Bewegungsrichtung; und
wobei das Anzeigen (S103) des Desktopseitenwechselidentifikators entsprechend der Bewegungsrichtung auf der ersten Desktopseite den folgenden Schritt aufweist:
Anzeigen (B3) des Desktopseitenwechselidentifikators, dessen voreingestellte Position nahe dem voreingestellten Rand auf der ersten Desktopseite ist.

3. Verfahren nach Anspruch 1, bei welchem das Anzeigen (S103) des Desktopseitenwechselidentifikators entsprechend der Bewegungsrichtung auf der ersten Desktopseite die folgenden Schritte aufweist:
Anzeigen des Desktopseitenwechselidentifikators an einer Position nahe einer rechten Seite des Touchscreens auf der ersten Desktopseite, wenn die Bewegungsrichtung von links nach rechts verläuft, oder
Anzeigen des Desktopseitenwechselidentifikators an einer Position nahe einer linken Seite des Touchscreens auf der ersten Desktopseite, wenn die Bewegungsrichtung von rechts nach links verläuft, oder
Anzeigen des Desktopseitenwechselidentifikators an einer Position nahe einer unteren Seite des Touchscreens auf der ersten Desktopseite, wenn die Bewegungsrichtung von oben nach unten verläuft, oder
Anzeigen des Desktopseitenwechselidentifikators an einer Position nahe einer oberen Seite des Touchscreens auf der ersten Desktopseite, wenn die Bewegungsrichtung von unten nach oben verläuft.

4. Verfahren nach Anspruch 2, bei welchem das Anzeigen (S103) des Desktopseitenwechselidentifikators entsprechend der Bewegungsrichtung auf der ersten Desktopseite den folgenden Schritt aufweist:
Anzeigen des Desktopseitenwechselidentifikators, wenn ein Abstand zwischen dem voreingestellten Icon und einem voreingestellten Referenzobjekt kleiner als ein voreingestellter Abstand ist, und die Desktopseite, deren relatives Positionsverhältnis mit der Bewegungsrichtung übereinstimmt, in den anderen Desktopseiten nicht leer ist, wobei das voreingestellte Referenzobjekt den voreingestellten Rand oder die voreingestellte Position des Desktopseitenwechselidentifikators aufweist.

5. Verfahren nach Anspruch 1, ferner mit dem Schritt:
Bestimmen, dass eine Displayposition des Desktopseitenwechselidentifikators auf der ersten Desktopseite von einer Anzeigeposition des Desktopseitenwechselidentifikators auf der zweiten Desktopseite verschieden ist.

6. Desktopseitenanzeigevorrichtung, bei welcher die Vorrichtung aufweist:
ein Feststellungsmodul (802), das dazu ausgebildet ist, festzustellen, ob ein Icon-Bewegungsvorgang für ein voreingestelltes Icon auf einer ersten Desktopseite überwacht wird oder nicht, wobei die erste Desktopseite eine gegenwärtig auf einem Touchscreen angezeigte Desktopseite ist;
ein Erfassungsmodul (802), das dazu ausgebildet ist, eine Bewegungsrichtung des Icon-Bewegungsvorgangs zu erfassen, wenn der Icon-Bewegungsvorgang überwacht wird;
ein erstes Anzeigemodul (803), das dazu ausgebildet ist, einen Desktopseitenwechselidentifikator entsprechend der Bewegungsrichtung auf der ersten Desktopseite gemäß der Bewegungsrichtung anzuzeigen; und
ein weites Anzeigemodul (804), das dazu ausgebildet ist, eine zweite Desktopseite anzuzeigen, wenn der Desktopseitenwechselidentifikator durch den Icon-Bewegungsvorgang aktiviert wird, wobei die zweite Desktopseite eine andere Desktopseite als die erste Desktopseite ist, entsprechend der Bewegungsrichtung;
wobei das zweite Anzeigemodul (804) ein Überwachungs-Sub-Modul (8044), ein fünftes Feststellungs-Sub-Modul (8045) und ein Verarbeitungs-Sub-Modul (046) aufweist,
wobei das Überwachungs-Sub-Modul (8044) dazu ausgebildet ist, eine Desktop-Auswahltrajektorie zu überwachen, welche von dem Desktopseitenwechselidentifikator empfangen wird, wenn der Desktopseitenwechselidentifikator durch den Icon-Bewegungsvorgang aktiviert wird, wobei die Desktop-Auswahlbahn eine Zifferntrajektorie ist;
wobei das fünfte Bestimmungs-Sub-Modul (8045) dazu ausgebildet ist, eine mittels der Desktop-Auswahltrajektorie von anderen Desktopseiten ausgewählten Desktopseite, deren relatives Positionsverhältnis mit der Bewegungsrichtung übereinstimmt, zu bestimmen, wobei die anderen Desktopseiten eine von der ersten Desktopseite verschiedene Desktopseite von mindestens zwei Desktopseiten sind, welche in der Desktopseitenanzeigevorrichtung gespeichert sind, und
das Verarbeitungs-Sub-Modul (8046) dazu ausgebildet ist, die mittels der Desktop-Auswahltrajektorie gewählten Desktopseite als die zweite Desktopseite zu bestimmen und die zweite Desktopseite anzuzeigen.

7. Vorrichtung nach Anspruch 6, bei welcher das Erfassungsmodul (802) aufweist:
ein erstes Bestimmungs-Sub-Modul (8021), das dazu ausgebildet ist, einen voreingestellten Rand zu bestimmen, in dessen Richtung der Icon-Bewegungsvorgang ausgeführt wird, wenn der Icon-Bewegungsvorgang überwacht wird,
ein zweites Bestimmungsmodul (8022), das dazu ausgebildet ist, eine Richtung der von dem Icon-Bewegungsvorgang in Richtung des voreingestellten Randes durchgeführten Bewegung als die Bewegungsrichtung zu bestimmen; und
wobei das erste Anzeigemodul (803) aufweist:
ein zweites Anzeige-Sub-Modul (8031), das dazu ausgebildet ist, den Desktopseitenwechselidentifikator, dessen voreingestellte Position nahe dem voreingestellten Rand auf der ersten Desktopseite ist, anzuzeigen.

## Revendications

1. Procédé d'affichage de page de bureau, le procédé comprenant :
la détermination (S101) du fait de savoir si une opération de déplacement d'icône pour une icône prédéfinie sur une première page de bureau est surveillée ou non, la première page de bureau étant une page de bureau actuellement affichée sur un écran tactile ;
l'acquisition (S102) d'une direction de déplacement de l'opération de déplacement d'icône lorsque l'opération de déplacement d'icône est surveillée ;
l'affichage (S103) d'un identifiant de commutation de page de bureau correspondant à la direction de déplacement sur la première page de bureau selon la direction de déplacement ; et
l'affichage (S104) d'une seconde page de bureau lorsque l'identifiant de commutation de page de bureau est activé par l'opération de déplacement d'icône, la seconde page de bureau étant une page de bureau, autre que la première page de bureau, correspondant à la direction de déplacement ;
dans lequel l'affichage (S104) de la seconde page de bureau lorsque l'identifiant de commutation de page de bureau est activé par l'opération de déplacement d'icône comprend :
la surveillance (C3) d'une trajectoire de sélection de bureau reçue par l'identifiant de commutation de page de bureau lorsque l'identifiant de commutation de page de bureau est activé par l'opération de déplacement d'icône, la trajectoire de sélection de bureau étant une trajectoire numérique ;
la détermination (C4) d'une page de bureau, la page de bureau dont une relation de position relative est cohérente avec la direction de déplacement, sélectionnée au moyen de la trajectoire de sélection de bureau à partir d'autres pages de bureau, les autres pages de bureau comprenant une page de bureau, autre que le première page de bureau, d'au moins deux pages de bureau stockées dans un dispositif où se trouve l'écran tactile ; et
la détermination (C5) du bureau sélectionné au moyen de la trajectoire de sélection de bureau comme seconde page de bureau, et l'affichage de la seconde page de bureau.

2. Procédé selon la revendication 1, dans lequel l'acquisition (S102) de la direction de déplacement de l'opération de déplacement d'icône lorsque l'opération de déplacement d'icône est surveillée comprend :
la détermination (B1) d'une bordure prédéfinie vers laquelle l'opération de déplacement d'icône est exécutée lorsque l'opération de déplacement d'icône est surveillée ;
la détermination (B2) d'une direction de déplacement exécutée par l'opération de déplacement d'icône vers la bordure prédéfinie comme direction de déplacement ; et
dans lequel l'affichage (S103) de l'identifiant de commutation de page de bureau correspondant à la direction de déplacement sur la première page de bureau comprend :
l'affichage (B3) de l'identifiant de commutation de page de bureau dont une position prédéfinie est proche de la bordure prédéfinie sur la première page de bureau.

3. Procédé selon la revendication 1, dans lequel l'affichage (S103) de l'identifiant de commutation de page de bureau correspondant à la direction de déplacement sur la première page de bureau comprend :
l'affichage de l'identifiant de commutation de page de bureau à une position proche d'un côté droit de l'écran tactile sur la première page de bureau lorsque la direction de déplacement est de gauche à droite ; ou
l'affichage de l'identifiant de commutation de page de bureau à une position proche d'un côté gauche de l'écran tactile sur la première page de bureau lorsque la direction de déplacement est de droite à gauche ; ou
l'affichage de l'identifiant de commutation de page de bureau à une position proche d'un côté inférieur de l'écran tactile sur la première page de bureau lorsque la direction de déplacement est de haut en bas ; ou
l'affichage de l'identifiant de commutation de page de bureau à une position proche d'un côté supérieur de l'écran tactile sur la première page de bureau lorsque la direction de déplacement est de bas en haut.

4. Procédé selon la revendication 2, dans lequel l'affichage (S103) de l'identifiant de commutation de page de bureau correspondant à la direction de déplacement sur la première page de bureau comprend :
l'affichage de l'identifiant de commutation de page de bureau lorsqu'une distance entre l'icône prédéfinie et un objet de référence prédéfini est inférieure à une distance prédéfinie et la page de bureau dont la relation de position relative est compatible avec la direction de déplacement dans les autres pages de bureau n'est pas nulle, l'objet de référence prédéfini comprenant la bordure prédéfinie ou la position prédéfinie de l'identifiant de commutation de bureau.

5. Procédé selon la revendication 1, comprenant en outre :
la détermination du fait qu'une position d'affichage de l'identifiant de commutation de page de bureau sur la première page de bureau est différente d'une position d'affichage de l'identifiant de commutation de page de bureau sur la seconde page de bureau.

6. Dispositif d'affichage de page de bureau, le dispositif comprenant :
un module de détermination (801), configuré pour déterminer si une opération de déplacement d'icône pour une icône prédéfinie sur une première page de bureau est surveillée ou non, la première page de bureau étant une page de bureau actuellement affichée sur un écran tactile ;
un module d'acquisition (802), configuré pour acquérir une direction de mouvement de l'opération de mouvement d'icône lorsque l'opération de mouvement d'icône est surveillée ;
un premier module d'affichage (803), configuré pour afficher un identifiant de commutation de page de bureau correspondant à la direction de déplacement sur la première page de bureau selon la direction de déplacement ; et
un second module d'affichage (804), configuré pour afficher une seconde page de bureau lorsque l'identifiant de commutation de page de bureau est activé par l'opération de déplacement d'icône, la seconde page de bureau étant une page de bureau, autre que la première page de bureau, correspondant à la direction de déplacement ;
le second module d'affichage (804) comporte un sous-module de surveillance (8044), un cinquième sous-module de détermination (8045) et un sous-module de traitement (8046) :
le sous-module de surveillance (8044) est configuré pour surveiller une trajectoire de sélection de bureau reçue par l'identifiant de commutation de page de bureau lorsque l'identifiant de changement de page de bureau est activé par l'opération de déplacement d'icône, la trajectoire de sélection de bureau étant une trajectoire numérique ;
le cinquième sous-module de détermination (8045) est configuré pour déterminer un bureau, la page de bureau dont une relation de position relative est compatible avec la direction de déplacement, sélectionné au moyen de la trajectoire de sélection de bureau à partir d'autres pages de bureau, les autres pages de bureau comprenant une page de bureau, autre que la première page de bureau, d'au moins deux pages de bureau stockées dans le dispositif d'affichage de page de bureau ; et
et le sous-module de traitement (8046) est configuré pour déterminer la page de bureau sélectionnée au moyen de la trajectoire de sélection de bureau comme seconde page de bureau, et afficher la seconde page de bureau.

7. Dispositif selon la revendication 6, dans lequel le module d'acquisition (802) comprend :
un premier sous-module de détermination (8021), configuré pour déterminer une bordure prédéfinie vers laquelle l'opération de déplacement d'icône est exécutée lorsque l'opération de déplacement d'icône est surveillée ;
un deuxième sous-module de détermination (8022), configuré pour déterminer une direction de déplacement exécutée par l'opération de déplacement d'icône vers la bordure prédéfinie comme direction de déplacement ; et
dans lequel le premier module d'affichage (803) comprend :
un second sous-module d'affichage (8031), configuré pour afficher l'identifiant de commutation de page de bureau dont une position prédéfinie est proche de la bordure prédéfinie sur la première page de bureau.
